# FASCICULE DE BREVET EUROPEEN

(11) **EP 4 590 607 B1**
(45) Date de publication et mention de la délivrance du brevet: **11.11.2026**
(21) Numéro de dépôt: 23783001.3
(22) Date de dépôt: 08.09.2023
(51) Int. Cl.: B65G 1/00, B65G 1/04

(54) **MÉTHODE ET SYSTÈME POUR LA GESTION D'ÉNERGIE DANS UN SYSTÈME DE STOCKAGE ET DE RÉCUPÉRATION AUTOMATISÉ**
VERFAHREN UND SYSTEM ZUR ENERGIEVERWALTUNG IN EINEM AUTOMATISIERTEN REGALBEDIENUNGSSYSTEM
METHOD AND SYSTEM FOR ENERGY MANAGEMENT IN AN AUTOMATED STORAGE AND RETRIEVAL SYSTEM

(30) Priorité: 20.09.2022 FR 2209518
(43) Date de publication de la demande: 30.07.2025
(73) Titulaire: Exotec Product France, 59290 Wasquehal (FR)
(72) Inventeur: BARBE, David, 59110 La Madeleine (FR)
(74) Mandataire: Plasseraud IP
(86) Numéro de dépôt international: PCT/FR2023/051363
(87) Numéro de publication internationale: WO 2024/062175

(56) Documents cités:
- WO-A1-2021/058442
- US-A1- 2009 074 545
- US-A1- 2020 122 927
- BORTOLINI MARCO ET AL: "Time and energy optimal unit-load assignment for automatic S/R warehouses", INTERNATIONAL JOURNAL OF PRODUCTION ECONOMICS, ELSEVIER, AMSTERDAM, NL, vol. 190, 3 August 2016 (2016-08-03), pages 133 - 145, XP085130194, ISSN: 0925-5273, DOI: 10.1016/J.IJPE.2016.07.024
- HEMMATI FAR MOHAMMAD ET AL: "A fuzzy bi-objective flexible cell scheduling optimization model under green and energy-efficient strategy using Pareto-based algorithms: SATPSPGA, SANRGA, and NSGA-II", THE INTERNATIONAL JOURNAL OF ADVANCED MANUFACTURING TECHNOLOGY, SPRINGER, LONDON, vol. 105, no. 9, 27 May 2019 (2019-05-27), pages 3853 - 3879, XP036964793, ISSN: 0268-3768, [retrieved on 20190527], DOI: 10.1007/S00170-019-03797-W
- LEE SEOKGI ET AL: "An electric forklift routing problem with battery charging and energy penalty constraints", JOURNAL OF INTELLIGENT MANUFACTURING, SPRINGER US, NEW YORK, vol. 33, no. 6, 31 March 2021 (2021-03-31), pages 1761 - 1777, XP037881436, ISSN: 0956-5515, [retrieved on 20210331], DOI: 10.1007/S10845-021-01763-6

## Description

### Domaine technique

La présente divulgation relève du domaine des systèmes de stockage et de récupération automatisés ASRS (de l'anglais *« Automated storage and retrieval system »*) dans les entrepôts.

### Technique antérieure

Les systèmes de stockage et de récupération automatisés (ASRS) comportent des véhicules autonomes ou AGV (de l'anglais « *Auto Guided Vehicles »*). De tels AGV sont configurés pour naviguer au sein d'une structure dans laquelle sont stockés des articles de manière complètement autonome, c'est-à-dire sans intervention humaine. Les véhicules autonomes se déplacent dans la structure pour y placer ou y retirer les articles.

Classiquement, les véhicules autonomes se déplacent à une vitesse leur permettant d'achever un ensemble de tâches de placement ou de retrait d'articles le plus rapidement possible et viennent se connecter à une borne de recharge lorsque nécessaire. Cependant, les véhicules autonomes se retrouvent rapidement déchargés, et le système de stockage et de récupération automatisé consomme une énergie considérable pour leur recharge.

Le document WO 2020/200821 propose un dispositif de surveillance configuré pour surveiller l'énergie disponible, et de modifier la stratégie de recharge et/ou la vitesse de déplacement des véhicules autonomes lorsque l'énergie disponible passe sous un seuil prédéterminé. En outre, le document WO 20215/8442 décrit de surveiller le prix de l'énergie, et d'adapter la stratégie de recharge en fonction des coûts de l'énergie.

Ces solutions permettent effectivement de limiter temporairement la quantité d'énergie consommée par le système, ainsi que les coûts associés. Cependant, ces stratégies sont indépendantes du nombre de tâches que doivent réaliser les véhicules autonomes en un temps imparti. Lorsque le système fonctionne en consommation d'énergie réduite, le temps nécessaire à la réalisation de l'ensemble des tâches peut augmenter considérablement. La productivité des systèmes est alors réduite. En outre, des périodes de surconsommation énergétique peuvent apparaitre pour compenser les phases de fonctionnement à consommation réduite, rendant l'ensemble du système énergivore sur le temps long.

### Résumé

La présente divulgation vient améliorer la situation.

Il est proposé une méthode pour la gestion d'énergie dans un système de stockage et de récupération automatisé, ledit système comprenant une pluralité de véhicules autonomes, la méthode comprenant :
- déterminer des tâches à réaliser dans une durée prédéterminée;
- déterminer une flotte de véhicules autonomes à mobiliser pour réaliser les tâches dans la durée prédéterminée, des paramètres de fonctionnement des véhicules autonomes pour réaliser les tâches dans la durée prédéterminée et une stratégie de recharge en énergie des véhicules autonomes pour réaliser les tâches dans la durée prédéterminée, en : déterminant une perte énergétique, la perte énergétique étant une différence entre une quantité d'énergie électrique utilisée et une quantité d'énergie mécanique produite pendant la durée prédéterminée pour une pluralité de combinaisons de flotte de véhicules autonomes, de paramètres de fonctionnement et de stratégie de recharge ; et sélectionnant la combinaison présentant la différence la plus faible de sorte que la quantité d'énergie consommée pour réaliser les tâches dans la durée prédéterminée soit minimale, au moins lorsque les tâches sont inférieures à un nombre de tâches seuil.

Ainsi, la consommation d'énergie du système peut être adaptée selon le nombre de tâches à réaliser en un temps imparti. La consommation d'énergie peut être réduite tout en assurant que les tâches sont accomplies dans le temps imparti.

Ces étapes de détermination de la flotte de véhicules autonomes, des paramètres de fonctionnement des véhicules autonomes et/ou la stratégie de recharge des véhicules autonomes permettent d'évaluer une pluralité de solutions théoriques et de les comparer les unes aux autres selon l'énergie qu'elles consommeraient pour identifier la plus adaptée (c'est-à-dire celle consommant le moins d'énergie).

Les caractéristiques exposées dans les paragraphes suivants peuvent, optionnellement, être mises en œuvre, indépendamment les unes des autres ou en combinaison les unes avec les autres.

Déterminer la flotte de véhicules autonomes, les paramètres de fonctionnement des véhicules autonomes et la stratégie de recharge des véhicules autonomes peut être réalisé si les tâches sont inférieures au nombre de tâches seuil, et peuvent prendre, sinon, des valeurs préétablies par défaut.

Ainsi, la flotte de véhicules autonomes, les paramètres de fonctionnement des véhicules autonomes et/ou la stratégie de recharge peuvent être déterminés pour consommer moins d'énergie seulement lorsque les conditions le permettent, c'est-à-dire lorsque le nombre de tâches à réaliser est suffisamment faible et ce, pendant un temps déterminé. Dans le cas contraire, les valeurs préétablies par défaut peuvent permettre de réaliser les tâches le plus rapidement possible. La productivité du système n'est pas compromise.

Les paramètres de fonctionnement peuvent comprendre au moins un parmi : un taux d'accélération, un taux de décélération et une vitesse de déplacement. Ces paramètres permettent de réduire la quantité d'énergie consommée par chaque véhicule autonome lorsqu'il se déplace dans l'entrepôt. Dans le cas du taux de décélération, il est en outre possible de regénérer de l'énergie lors du freinage.

Chaque véhicule autonome peut être configuré pour se déplacer selon une direction longitudinale, une direction latérale et une direction verticale, et les paramètres de fonctionnement peuvent comprendre au moins un parmi : un taux d'accélération en ascension verticale, un taux de décélération en ascension verticale, un taux d'accélération en descente verticale, un taux de décélération en descente verticale. Ainsi, la fonction d'ascension des véhicules autonomes peut être exploitée pour réduire d'avantage la quantité d'énergie consommée par les véhicules autonomes. Lors de la descente, il est également possible de régénérer une quantité d'énergie considérable.

Chaque taux peut être une valeur fixe ou une fonction de la vitesse de déplacement. Dans le cas d'une valeur fixe, les taux d'accélération et de décélération peuvent être déterminés plus facilement (les calculs sont simplifiés). Cela peut notamment permettre d'atteindre une adaptation des taux en quasi temps réel. Dans le cas d'une fonction de la vitesse de déplacement, les taux d'accélération et de décélération peuvent être davantage optimisés pour réduire encore la quantité d'énergie consommée et régénérer d'avantage d'énergie.

Définir la stratégie de recharge peut comprendre sélectionner un courant de recharge et un temps de recharge. Ces paramètres permettent effectivement de réduire la quantité d'énergie électrique utilisée pour recharger la flotte de véhicules autonomes, en particulier en évitant les pertes liées à une recharge plus rapide que nécessaire.

Les paramètres de fonctionnement des véhicules autonomes et/ou la stratégie de recharge des véhicules autonomes peuvent être identiques pour chaque véhicule autonome de la flotte de véhicule autonome. Ainsi, la détermination peut être simplifiée. Lorsque la stratégie de recharge est commune, le véhicule autonome peut en outre se recharger indifféremment auprès de n'importe quelle borne de recharge.

La quantité d'énergie électrique utilisée peut être fonction du nombre de véhicules autonomes, des paramètres de fonctionnement et de la stratégie de recharge. Ainsi, la quantité d'énergie électrique correspond à l'énergie électrique consommée par le système dans son ensemble pour la réalisation des tâches. L'optimisation devient alors globale et coordonnée et permet des économies énergétiques d'échelle plutôt que des économies temporaires et locales qui entraineraient des surconsommations par ailleurs.

La quantité d'énergie mécanique produite peut être fonction des paramètres de fonctionnement. Ainsi, la quantité d'énergie mécanique produite correspond à l'énergie utilisée (l'énergie efficace) par la flotte de véhicules autonomes pour se déplacer, par opposition aux pertes.

La perte énergétique peut être déterminée par simulation ou par expérimentation. Par simulation, la perte énergétique peut être déterminée à l'aide d'un modèle du système. Il est possible de tester un grand nombre de combinaisons. Par expérimentation, la perte énergétique peut être déterminée de manière plus simple et accessible. Dans ce cas, le système peut être évolutif : il peut « apprendre ».

La combinaison présentant la perte énergétique la plus faible peut être mémorisée dans une base de données. Ainsi, l'étape de détermination de la flotte de véhicules autonomes, des paramètres de fonctionnement des véhicules autonomes et/ou de la stratégie de recharge des véhicules autonomes peut-être simplifiée, en parcourant la base de données.

Lorsque la durée prédéterminée est supérieure à une durée prédéterminée limite, une flotte de véhicules autonomes minimale, des paramètres de fonctionnement extrêmes et/ou une stratégie de recharge extrême peuvent être sélectionnés. La quantité d'énergie consommée pour réaliser les tâches peut être encore réduite, puisque les tâches peuvent être réalisées sur une durée très longue (assimilée à une durée infinie). Il n'y a plus de contrainte temporelle pour la réalisation des tâches.

Selon un autre aspect, il est proposé un programme informatique comportant des instructions pour la mise en œuvre de la méthode lorsque ce programme est exécuté par un processeur.

Selon un autre aspect, il est proposé un système de stockage et de récupération automatisé comprenant :
- une pluralité de véhicules autonomes configurés pour retirer et/ou stocker des articles ;
- au moins une borne de recharge de véhicule autonome ; et
- un processeur configuré pour contrôler la flotte de véhicules autonomes, les paramètres de fonctionnement des véhicules autonomes et/ou la stratégie de recharge par la mise en œuvre de la méthode.

Chaque véhicule autonome peut être configuré pour se déplacer selon une direction longitudinale, une direction transversale et une direction verticale. Ainsi, les véhicules autonomes peuvent se déplacer en trois dimensions dans l'entrepôt, accédant à tous les articles stockés de manière efficiente.

### Brève description des dessins

D'autres caractéristiques, détails et avantages apparaîtront à la lecture de la description détaillée ci-après, et à l'analyse des dessins annexés, sur lesquels :
La figure 1 illustre schématiquement un système de stockage et de récupération automatisé selon un mode de réalisation.
La figure 2 illustre schématiquement un véhicule autonome apte à être mis en œuvre dans le système de la figure 1 selon un mode de réalisation.
La figure 3 illustre un organigramme d'une méthode pour la gestion d'énergie apte à être mis en œuvre dans le système de la figure 1 selon un mode de réalisation.
La figure 4 illustre un graphique de tâches en fonction du temps selon un mode de réalisation.
La figure 5 illustre schématiquement une comparaison entre deux modes de fonctionnement du système de stockage et de récupération automatisé de la figure 1 selon un mode de réalisation.
La figure 6 illustre un graphique de la vitesse de déplacement et de la consommation d'énergie du véhicule autonome de la figure 2 en fonction du temps selon un mode de réalisation.
La figure 7 illustre un organigramme d'une méthode pour déterminer la flotte de véhicules autonomes, les paramètres de fonctionnement, et la stratégie de recharge permettant de consommer une quantité d'énergie minimale selon un mode de réalisation.

### Description des modes de réalisation

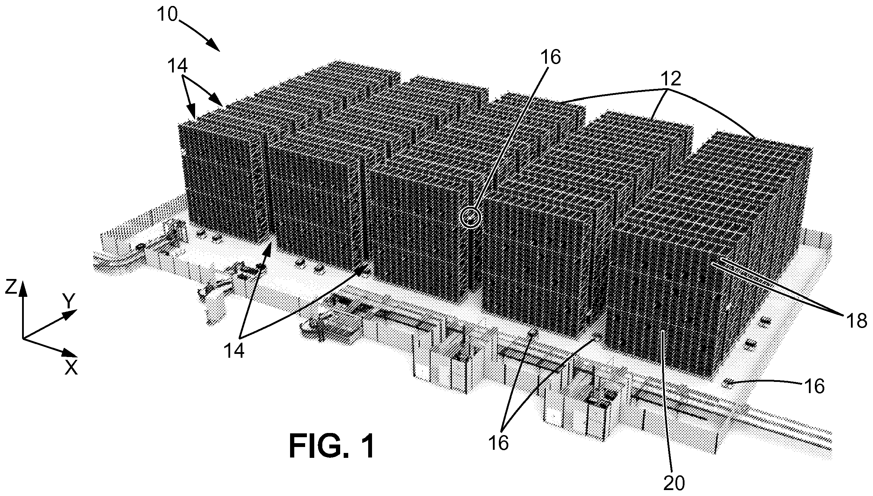

La figure 1 illustre schématiquement un système de stockage et de récupération automatisé ASRS 10 (de l'anglais *« Automated storage and retrieval system »*). Un tel système 10 est utilisé dans les entrepôts pour le stockage d'articles.

Le système 10 comprend une pluralité de racks de stockage 12 destinés à recevoir les articles pour leur stockage. Les racks de stockage 12 sont espacés les uns des autres selon une direction longitudinale x et une direction latérale y pour former un quadrillage d'allées 14 entre lesquelles peuvent circuler des véhicules autonomes 16. Les racks de stockage 12 sont par exemple espacés d'une distance de 800 mm, de 600 mm voir de 400 mm.

Chaque rack de stockage 12 comprend une pluralité de colonnes de stockage 18 disposées en rangées. Chaque rack de stockage 12 peut comprendre une ou deux rangées de colonnes de stockage 18. Les colonnes de stockage 18 reçoivent des palettes 20 (ou d'autre supports/contenants tels que des « bacs »), les palettes 20 étant superposées les unes au-dessus des autres le long de la colonne de stockage 18 (c'est-à-dire le long de la direction verticale z). Les palettes 20 reçoivent les articles, et leur superposition permet un stockage à haute densité des articles dans l'entrepôt. Les véhicules autonomes 16 peuvent prendre appui sur les colonnes de stockage 18 pour se déplacer selon la direction verticale z et accéder aux articles en hauteur.

Le système 10 comprend en outre une pluralité de véhicules autonomes 16 ou AGV (de l'anglais « *Auto Guided Vehicles »*). La pluralité de véhicules autonomes 16 se déplace dans les allées 14 selon les directions longitudinale et latérale x,y et selon la direction verticale z afin de pouvoir accéder à tous les articles stockés dans l'entrepôt. Les véhicules autonomes 16 peuvent réaliser des tâches de placement et de retrait d'articles en se déplaçant selon les directions longitudinale, latérale et verticale x,y,z.

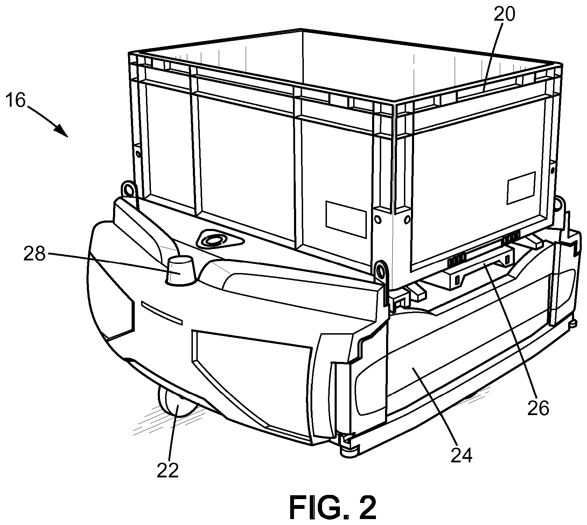

La figure 2 illustre plus en détails un véhicule autonome 16.

Le véhicule autonome 16 comprend des moyens d'avancement 22, par exemple sous la forme de roues 22, adaptés au déplacement du véhicule autonome 16 selon les directions latérale et longitudinale y,x (c'est-à-dire le déplacement au sol). Le véhicule autonome 16 peut ainsi se déplacer dans les allées 14 entre les racks de stockage 12.

Le véhicule autonome 16 comprend en outre un système d'ascension 24 adapté au déplacement selon la direction verticale z. Aux deux dimensions planes associées généralement au sol sur lequel se déplace le véhicule autonome 16 s'ajoute une troisième dimension verticale associée aux racks de stockage 12 sur lesquels le véhicule autonome 16 est capable de monter et de descendre. Le système d'ascension 24 peut s'engager avec les colonnes de stockage 18 de deux racks de stockage 12 voisins et évoluer le long des colonnes de stockage 18.

Les moyens d'avancement 22 et le système d'ascension 24 peuvent être entrainés par un moteur (non visible). Le moteur peut par exemple être configuré pour atteindre une vitesse de déplacement vⱼ de 4 m/s. La vitesse de déplacement vⱼ peut être la vitesse de déplacement vⱼ selon les directions latérale et longitudinale y, x, ou encore la vitesse de déplacement selon la direction verticale z.

Le véhicule autonome 16 comprend en outre une interface 26 adaptée à retirer ou insérer une palette 20 dans un rack de stockage 12, et à supporter ladite palette 20. La palette 20 peut être retirée du rack de stockage 12 et transportée par le véhicule autonome 16. La palette 20 peut également être transportée par le véhicule autonome 16 et insérée dans le rack de stockage 12. L'interface 26 peut notamment être configurée pour supporter des charges jusqu'à 30 kg.

Le véhicule autonome 16 peut comprendre un système de guidage 28, par exemple un système de guidage 28 par laser. Le véhicule autonome 16 peut ainsi se localiser dans l'entrepôt et peut évaluer son environnement pour éviter des obstacles éventuels, y compris d'autres véhicules autonomes 16.

Le véhicule autonome 16 peut être alimenté par une batterie embarquée (ou plusieurs ; non visible) configurée pour alimenter les autres éléments du véhicule autonome 16 en énergie électrique. Alors, le système 10 comprend en outre au moins une borne de recharge (non illustrée). Le véhicule autonome 16 peut venir se connecter à une borne de recharge pour recharger la batterie embarquée. Le système 10 peut comprendre une unique borne de recharge pour recharger l'ensemble des véhicules autonomes 16. Alternativement, le système 10 peut comprendre une pluralité de bornes de recharge pour permettre à une pluralité de véhicules autonomes 16 de recharger en même temps.

Le système 10 comprend en outre un processeur adapté à contrôler les véhicules autonomes 16 et la au moins une borne de recharge pour réaliser des tâches L_{X} dans une durée prédéterminée t_{f}. Les tâches L_{X} correspondent à un nombre d'articles X à retirer (ou insérer dans) les racks de stockage 12. Les tâches peuvent par exemple être une tâche (X=1), 10 tâches (X=10), 100 tâches (X=100) voire 1000 tâches (X=1000). La durée prédéterminée t_{f} correspond à une durée dans laquelle les tâches L_{X} doivent être réalisées. La durée prédéterminée t_{f} peut être en heures, en jours, en semaines ou en mois. La durée prédéterminée t_{f} est mesurée à partir d'un instant initial t0.

Le processeur est configuré pour sélectionner une flotte de véhicules autonomes N. La flotte de véhicules autonomes N correspond au nombre de véhicules autonomes 16 actifs, c'est-à-dire au nombre de véhicules autonomes se déplaçant dans l'entrepôt pour réaliser les tâches L_{X}. La flotte de véhicules autonomes N peut par exemple être un nombre compris entre zéro véhicules autonomes 16 et un nombre maximal Nₘₐₓ de véhicules autonomes 16. Le nombre maximal peut par exemple être 10, 20, 50 voire 100 véhicules autonomes 16. Le processeur peut sélectionner la flotte de véhicules autonomes N adaptée à la réalisation des tâches dans la durée prédéterminée t_{f}.

On note que, outre leur nombre, le processeur peut identifier les véhicules autonomes 16 constituant la flotte, en particulier lorsque ces derniers ne sont pas tous identiques (modèles ou versions différents, dimensionnements différents, usure de certains composants dont la batterie, outils spécifiques, etc.).

Le processeur est également configuré pour sélectionner des paramètres de fonctionnement Pⱼ de la flotte de véhicules autonomes N. Les paramètres de fonctionnement Pⱼ peuvent être définis par le processeur et transmis aux véhicules autonomes 16. Par paramètres de fonctionnement Pⱼ, on entend les paramètres permettant aux véhicules autonomes 16 de se déplacer. Par exemple, les paramètres de fonctionnement Pⱼ comprennent une vitesse de déplacement vⱼ selon les direction latérale y, longitudinale x et verticale z, un taux d'accélération aⱼ selon les direction latérale et longitudinale y,x, un taux de décélération dⱼ selon les direction latérale et longitudinale y,x, un taux d'accélération en ascension verticale caⱼ, un taux de décélération en ascension verticale cdⱼ, un taux d'accélération en descente verticale faⱼ et un taux de décélération en descente verticale fdⱼ.

Le processeur peut définir des paramètres de fonctionnement Pⱼ pour chacun des véhicules autonomes j de la flotte de véhicules autonomes N. Avantageusement, des paramètres de fonctionnement Pⱼ communs à l'ensemble des véhicules autonomes 16 de la flotte de véhicules autonomes N facilite le contrôle des véhicule autonomes 16 pour réaliser les tâches L_{X} dans la durée prédéterminée t_{f}. Alternativement, des paramètres de fonctionnement Pⱼ peuvent être définis pour chaque véhicule autonome j de la flotte de véhicules autonomes N. Chaque véhicule autonome j de la flotte de véhicules autonomes N peut avoir des paramètres de fonctionnement Pⱼ qui lui sont propre. Cette solution permet notamment d'optimiser l'utilisation de chaque véhicule autonome 16.

On note que les paramètres de fonctionnement de taux d'accélération aⱼ selon les directions latérale et longitudinale, de taux de décélération dⱼ selon les directions latérale et longitudinale x,y, de taux d'accélération en ascension verticale caⱼ,, de taux de décélération en ascension verticale cdⱼ, de taux d'accélération en descente verticale faⱼ et de taux de décélération en descente verticale fdⱼ peuvent être des paramètres constants. Alternativement, les taux d'accélération et de décélération peuvent être des fonctions de la vitesse de déplacement.

Le processeur est en outre configuré pour définir la stratégie de recharge en énergie Cⱼ des véhicules autonomes 16. Par stratégie de recharge Cⱼ, on entend notamment un temps de recharge tⱼ et un courant de charge Iⱼ. Le temps de recharge tⱼ correspond à une durée, par exemple en minutes ou en heures, pendant laquelle le véhicule autonome 16 est branché à la borne de recharge. Le courant de charge Iⱼ correspond à la quantité de courant utilisée pour charger la batterie embarquée du véhicule autonome 16 pendant le temps de recharge tⱼ. En outre, lorsque le système 10 comprend une pluralité de bornes de recharge, la stratégie de recharge Cⱼ. peut également comprendre un nombre de bornes de recharge actives, c'est-à-dire un nombre de bornes de recharge disponibles pour recharger le véhicule autonome 16.

Le processeur peut définir une stratégie de recharge en énergie Cⱼ commune à toutes les bornes de recharge. Ainsi, le véhicule autonome 16 peut venir se connecter à n'importe quelle borne de recharge. Alternativement, le processeur peut définir une stratégie de recharge en énergie Cⱼ propre à chaque borne de recharge. Alors, il est possible d'exploiter plusieurs stratégies de recharge en énergie Cⱼ simultanément. Alternativement encore, le processeur peut définir une stratégie de recharge en énergie Cⱼ pour chaque véhicule autonome j de la flotte de véhicules autonomes N, indépendamment de la borne de recharge. Dans ce cas, le véhicule autonome j peut s'identifier auprès de la borne de recharge, et la borne de recharge peut adopter la stratégie de recharge Cⱼ propre au véhicule autonome j identifié.

Dans un mode de fonctionnement dit « normal », le processeur peut sélectionner une flotte de véhicules autonomes N, des paramètres de fonctionnement des véhicules autonomes Pⱼ et une stratégie de recharge Cⱼ selon des valeurs préétablies par défaut. Par exemple, la flotte de véhicules autonomes N peut être un nombre de véhicule actifs Nₙₒᵣₘₐₗ, les paramètres de fonctionnement peuvent des paramètres Pⱼₙₒᵣₘₐᵤₓ et la stratégie de recharge peut être une stratégie C_{jnormal..} Le fonctionnement « normal » permet d'achever l'ensemble des tâches de placement ou de retrait d'articles le plus rapidement possible.

Dans un mode de fonctionnement dit « économique », le processeur peut déterminer une flotte de véhicules autonomes N, des paramètres de fonctionnement Pⱼ de la flotte de véhicules autonomes N et une stratégie de recharge Cⱼ permettant de réaliser les tâches L_{X} dans la durée prédéterminée t_{f} tout en consommant une quantité d'énergie réduite. Les tâches L_{X} sont réalisées dans un temps plus long (mais inférieur à la durée prédéterminée t_{f}) en consommant une quantité d'énergie minimale.

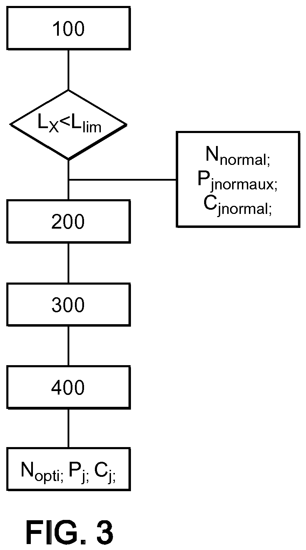

On décrit par la suite une méthode pour la gestion d'énergie, mise en œuvre par le processeur décrit ci-dessus, en référence à la figure 3.

La méthode peut être mise en œuvre périodiquement. Par exemple, la méthode peut être mis en œuvre à chaque fois qu'un ensemble de tâches a été complété par le système 10. La méthode peut également être mise en œuvre à chaque fois que des nouvelles tâches à réaliser sont assignées au système 10 La méthode pourrait également être mise en œuvre toutes les heures, tous les jours ou toutes les semaines en fonction de la périodicité habituelle de la mise à jour des tâches à effectuer.

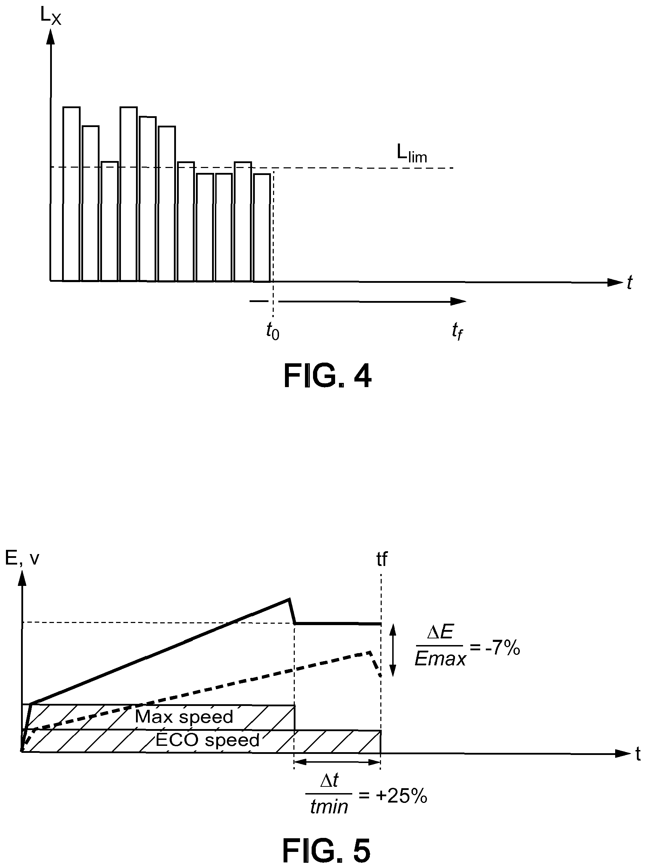

Selon une première étape 100, il est déterminé des tâches L_{X} à réaliser dans la durée prédéterminée t_{f}. Les tâches L_{X} à réaliser sont déterminées à partir de l'instant présent t0. Comme visible sur la figure 4, lorsque les tâches L_{X} sont inférieures à un nombre de tâches seuil Lₗᵢₘ, il est déterminé que la flotte de véhicules autonomes N, les paramètres de fonctionnement Pⱼ, et la stratégie de recharge Cⱼ peuvent être modifiés. Avantageusement, il est déterminé que le mode « économique » peut être activé en s'assurant que les tâches L_{X} seront réalisées dans la durée prédéterminée t_{f}. La quantité d'énergie consommée est réduite lorsque le nombre de tâches est plutôt faible, comme par exemple en fin de journée ou en fin de semaine.

Si le nombre de tâches L_{X} à réaliser est supérieur au nombre de tâches seuil Lₗᵢₘ, alors les valeurs restent les valeurs préétablies par défaut (N_{normal,} P_{jnormaux,} Cⱼₙₒᵣₘₐₗ). Le système 10 peut alors continuer à réaliser les tâches le plus rapidement possible (fonctionnement « normal ») lorsque le nombre de tâches à réaliser est important. Cette situation peut par exemple correspondre à un pic d'activité. Par exemple, dans le fonctionnement « normal », la vitesse de déplacement vⱼ peut être de 4 m/s.

Selon une deuxième étape 200, lorsque le nombre de tâches L_{X} est inférieur au nombre de tâches seuil Lₗᵢₘ, il est déterminé la flotte de véhicules autonomes N pour réaliser les tâches L_{X}. La flotte de véhicules autonomes N peut être déterminée en fonction des tâches L_{X} à réaliser et de la durée prédéterminée t_{f}. La flotte de véhicule N correspond au nombre de véhicules autonomes optimal Nₒₚₜᵢ pour réaliser les tâches L_{X} dans la durée prédéterminée t_{f}. La flotte de véhicules autonomes optimale Nₒₚₜᵢ peut par exemple correspondre au nombre de véhicules autonomes minimal permettant de réaliser les tâches L_{X} dans la durée prédéterminée t_{f}. Le nombre réduit de véhicules autonomes 16 permet de minimiser la quantité d'énergie consommée.

En effet, la figure 5 compare la puissance électrique consommée P_{elec} utilisée pour réaliser les tâches L_{X} dans la durée prédéterminée t_{f} en fonction de la flotte de véhicules autonomes N. Lorsque la flotte de véhicules autonomes N est la flotte de véhicules autonomes en fonctionnement normal Nₙₒᵣₘₐₗ (c'est-à-dire la flotte de véhicules autonomes préétablie par défaut), les tâches L_{X} sont réalisées dans un temps court mais requièrent une énergie électrique (courbe en trait plein) et donc une puissance électrique P_{elec} importante. Lorsque la flotte de véhicules autonomes N est la flotte de véhicules autonomes optimale Nₒₚₜᵢ, les tâches L_{X} sont réalisées dans un temps plus long mais requièrent une énergie électrique plus faible (courbe en trait pointillé) et donc une puissance électrique P_{elec} plus faible. Ainsi, une perte énergétique E sur la durée prédéterminée t_{f} est réduite. Réduire la flotte de véhicules autonomes N augmente le temps pour réaliser les tâches L_{X} mais réduit la quantité d'énergie électrique consommée sur la même durée.

Selon, une troisième étape 300 il est déterminé des paramètres de fonctionnements Pⱼ de la flotte de véhicules autonomes N. Par exemple, par rapport aux valeurs préétablies par défaut, la vitesse de déplacement vⱼ peut être réduite. Le taux d'accélération aⱼ selon les directions longitudinale et latérale x,y peut être réduit. Le taux de décélération dⱼ selon les directions longitudinale et latérale x,y peut être optimisé pour permettre une régénérescence d'énergie. Puisque le véhicule autonome 16 peut se déplacer selon la direction verticale z, il est avantageux de réduire en outre le taux d'accélération en ascension verticale caⱼ. En effet, la fonction d'ascension est particulièrement gourmande en énergie, et la réduction du taux d'accélération en ascension verticale caⱼ permet une réduction considérable de la quantité d'énergie consommée. Le taux de décélération en descente verticale fdⱼ peut également être optimisé. Une quantité d'énergie considérable peut ainsi être regénérée lorsque le véhicule autonome effectue une descente. Ces modifications permettent de minimiser la quantité d'énergie consommée par chaque véhicule autonome j de la flotte de véhicules autonomes N pendant leurs déplacements pour réaliser les tâches L_{X}.

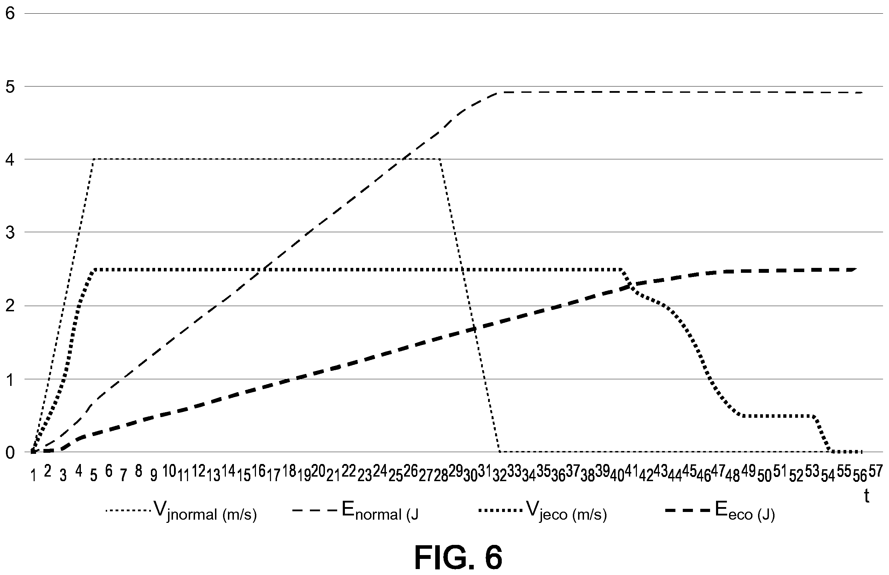

Par exemple, la figure 6 illustre la perte énergétique E par le véhicule autonome 16 lorsque la vitesse de déplacement vⱼ est réduite. On observe qu'une réduction de la vitesse de déplacement vⱼ de 1,5 m/s permet presque une division par deux de la consommation d'énergie pour la réalisation d'une tâche. En pratique, dans le fonctionnement « économique », la vitesse de déplacement vⱼ peut être de 3 m/s. Pour une tâche de 120 s, le temps de réalisation de la tâche augmente alors de 25%, mais la quantité d'énergie économisée peut être réduite de 7%.

Selon une quatrième étape 400, il est déterminé une stratégie de recharge Cⱼ. Par exemple, le courant de recharge Iⱼ peut être réduit par rapport à la valeur préétablie par défaut. Le temps de charge tⱼ peut être augmenté pour permettre de fournir la même quantité d'énergie au véhicule autonome 16 branché à la borne de recharge. Il peut également être réduit le nombre de bornes de recharges actives.

Comme décrit ci-avant, les paramètres de fonctionnements Pⱼ peuvent être commun à l'ensemble des véhicules autonomes de la flotte de véhicules autonomes N, facilitant leur détermination. Alternativement, les paramètres de fonctionnement Pⱼ peuvent être déterminés pour chaque véhicule autonome j de la flotte de véhicules autonomes N. En outre, la stratégie de recharge Cⱼ peut être commune à l'ensemble des bornes de recharge, propre à chaque borne de recharge ou encore propre à chaque véhicule autonome 16.

On note que les étapes de détermination de la flotte de véhicules autonomes 200, des paramètres de fonctionnements 300 et de stratégie de recharge 400 peuvent être réalisées simultanément, ou du moins dans un ordre quelconque et/ou en plusieurs fois.

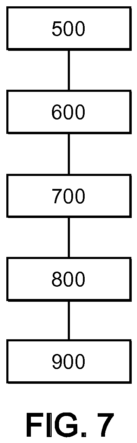

On décrit par la suite une méthode pour déterminer la flotte de véhicules autonomes N, les paramètres de fonctionnement Pⱼ, et la stratégie de recharge Cⱼ permettant de consommer une quantité d'énergie minimale, en référence à la figure 7.

La détermination de la flotte de véhicules autonomes N, des paramètres de fonctionnement Pⱼ et de la stratégie de recharge Cⱼ permettant de consommer la quantité d'énergie minimale peut être réalisée en amont de l'activation du fonctionnement dit « économique ». Il peut être prévu une base de données stockant une pluralité de tâches à réaliser dans une pluralité de durées prédéterminées. Pour chaque nombre de tâches et durée prédéterminée, il peut être associé une flotte de véhicules autonomes N, des paramètres de fonctionnement Pⱼ et une stratégie de recharge Cⱼ. Ainsi, les valeurs peuvent être retrouvées en parcourant la base de données selon les tâches L_{X} et la durée prédéterminée t_{f} à l'instant présent t0.

Selon une première étape 500, il est défini une pluralité de flottes de véhicules autonomes N. La pluralité de flottes de véhicules autonomes peut prendre la forme d'un vecteur allant de zéro véhicules autonomes au nombre maximum Nₘₐₓ de véhicules autonomes. [MATH. 1] $N = \left[0;1;…;j;…;{N}_{max}\right]$

Selon une deuxième étape 600, il est défini une pluralité de paramètres de fonctionnement Pⱼ. Chaque paramètre de fonctionnement Pⱼ peut être un vecteur comportant une vitesse de déplacement vⱼ, un taux d'accélération aⱼ, un taux de décélération dⱼ, un taux d'accélération en ascension verticale caⱼ, un taux de décélération en ascension verticale cdⱼ, un taux d'accélération en descente verticale faⱼ et un taux de décélération en descente verticale fdⱼ. Les vecteurs peuvent être associés à un véhicule autonome j particulier ou être communs à la flotte de véhicules autonomes N. Les taux d'accélération et de décélération peuvent être constants ou fonction de la vitesse de déplacement. [MATH. 2] ${P}_{j} = \left[\begin{matrix}{v}_{j} \\ {a}_{j} \\ {d}_{j} \\ {ca}_{j} \\ {cd}_{j} \\ {fa}_{j} \\ {fd}_{j}\end{matrix}\right]$

Selon une troisième étape 700, il est défini une pluralité de stratégies de recharge en énergie Cⱼ. Chaque stratégie de recharge en énergie Cⱼ. peut être un vecteur comportant un courant de charge Iⱼ et un temps de charge tⱼ. Les vecteurs peuvent être associés à un véhicule autonome particulier j, à une borne de recharge particulière, être communs à toutes les bornes de recharge et/ou tous les véhicules autonomes 16. [MATH. 3] ${C}_{j} = \left[\begin{matrix}{I}_{j} \\ {t}_{j}\end{matrix}\right]$

Selon une quatrième étape 800, il est déterminé une perte énergétique E pour une pluralité de combinaison de flottes de véhicules autonomes N, de paramètres de fonctionnement Pⱼ et de stratégies de recharge en énergie Cⱼ. La perte énergétique E est déterminée en fonction de la durée prédéterminée t_{f}. La perte énergétique E correspond ici à une différence entre la quantité d'énergie électrique utilisée E_{elec} et une quantité d'énergie mécanique produite E_{mech} pendant la durée prédéterminée t_{f}. [MATH. 4] $E \left({t}_{f}\right) = {E}_{elec} \left({t}_{f}\right) - {E}_{mech} \left({t}_{f}\right)$

La quantité d'énergie électrique utilisée E_{elec} est fonction des paramètres de fonctionnement Pⱼ et de la stratégie de recharge Cⱼ. En effet, la quantité d'énergie électrique utilisée E_{elec} correspond à l'énergie électrique consommée par le système 10 pour la réalisation des tâches L_{X} dans la durée prédéterminée t_{f}. La quantité d'énergie électrique utilisée E_{elec} peut notamment être calculée selon l'équation suivante. [MATH. 5] ${E}_{elec} \left({t}_{f}\right) = {\sum }_{j = 0}^{{N}_{max}} {\int }_{{t}_{0}}^{{t}_{f}} {P}_{elecj} \left(t, {P}_{j}, {C}_{u}\right) . dt$

La quantité d'énergie mécanique produite E_{mech} est fonction des paramètres de fonctionnement Pⱼ. En effet, l'énergie mécanique produite E_{mech} correspond à l'énergie utilisée par la flotte de véhicules autonomes pour réaliser les tâches (pour se déplacer). L'énergie mécanique produite E_{mech} peut notamment être calculée selon l'équation suivante. [MATH. 6] ${E}_{mech} \left({t}_{f}\right) = {\sum }_{j = 0}^{{N}_{max}} {\int }_{{t}_{0}}^{{t}_{f}} {P}_{mechj} \left(t, {P}_{j}\right) . dt$

On note que la perte énergétique E peut être déterminée expérimentalement ou par simulation.

Selon une cinquième étape 900, il est sélectionné la combinaison C de flotte de véhicules autonomes N, de paramètres de fonctionnement Pⱼ et stratégie de recharge Cⱼ présentant la perte énergétique E la plus faible. Cette combinaison C correspond à la flotte de véhicules autonomes optimale Nₒₚₜᵢ, aux paramètres de fonctionnement Pⱼ et à la stratégie de recharge Cⱼ à utiliser pour réaliser l'ensemble des tâches dans la durée prédéterminée t_{f} en consommant une quantité d'énergie minimale. La combinaison peut être regroupée dans un vecteur. [MATH. 7] $C = \left[\begin{matrix}{N}_{opti} \\ {P}_{j} \\ {I}_{j}\end{matrix}\right]$

Les combinaisons déterminées ci-avant peuvent être stockées dans une base de données et indexée en fonction de la durée prédéterminée t_{f} et du nombre de tâches L_{X}.

L'invention n'est pas limitée aux exemples décrits ci-avant mais est au contraire susceptible de nombreuses variantes accessibles à l'homme de l'art.

Par exemple, un ou plusieurs parmi la flotte de véhicules autonomes N, la stratégie de recharge en énergie Cⱼ ou les paramètres de fonctionnement Pⱼ peuvent être déterminés. Ainsi, un ou plusieurs parmi la flotte de véhicules autonomes N, la stratégie de recharge Cⱼ ou les paramètres de fonctionnement Pⱼ peuvent être modifiés par rapport aux valeurs préétablies par défaut. La détermination des valeurs en fonctionnement « économique » peut être simplifiée.

La méthode de détermination de la flotte de véhicules autonomes N, des paramètres de fonctionnement Pⱼ, et de la stratégie de recharge Cⱼ permettant de consommer une quantité d'énergie minimale décrite ci-avant pourrait être mise en œuvre à chaque fois qu'il est déterminé que les tâches L_{X} sont inférieures au nombre de tâches seuil Lₛₑᵤᵢₗ. La combinaison déterminée peut ensuite être stockée en mémoire. Lorsque les tâches et la durée prédéterminée est rencontrée à nouveau, le processeur peut sélectionner la combinaison stockée en mémoire. Le système peut apprendre et évoluer avec le temps.

En outre, il peut être déterminé la flotte de véhicules autonomes N, la stratégie de recharge en énergie Cⱼ ou les paramètres de fonctionnement Pⱼ quel que soit le nombre de tâches à réaliser. Le système peut alors constamment chercher à optimiser la consommation en énergie, sans mode de fonctionnement « normal » distinct.

Par ailleurs, lorsque la durée prédéterminée t_{f} est supérieure à une durée prédéterminée limite t_{inf}, il peut être considéré que la durée prédéterminée est infinie. Dans ce cas, une flotte de véhicules autonomes minimale Nₘᵢₙ, des paramètres de fonctionnement extrêmes Pⱼₑₓₜᵣ et/ou une stratégie de recharge extrême Cⱼₑₓₜᵣ peuvent être sélectionnés. La flotte de véhicules autonomes minimale correspond au plus petit nombre de véhicules autonomes permettant de réaliser les tâches. Les paramètres de fonctionnements extrêmes sont par exemple la vitesse la plus lente et les taux d'accélération les plus faibles permettant de consommer le moins d'énergie possible. La stratégie de recharge correspond au courant le plus faible et le temps de recharge le plus long. La quantité d'énergie consommée pour réaliser les tâches peut être encore réduite, puisque les tâches peuvent être réalisé sur une durée très longue.

La présente invention n'est en aucun cas limitée au type de véhicule autonome mis en œuvre dans la méthode de gestion d'énergie qui s'y rapporte.

Du point de vue du déplacement desdits véhicules autonomes, il peut s'agir de trajectoires en 2 dimensions, c'est-à-dire sur un plan (selon les directions latérales et longitudinales x,y seulement). À cet égard, lesdits véhicules autonomes disposent de moyens d'avancement aptes à rendre possible leurs déplacements selon ces deux dimensions. Le sol de l'entrepôt ou de manière plus générale du système de récupération et de stockage peut constituer le plan sur lequel se déplacent lesdits véhicules autonomes. Un exemple illustrant cette technologie est accessible dans la demande de brevet WO 2007/149712. Selon une autre configuration, les racks de stockage disposés dans l'entrepôt délimitent à leur sommet une surface plane sur laquelle les véhicules autonomes peuvent se déplacer. La demande de brevet WO 2015/104263 illustre par exemple cette technologie.

Lorsque les véhicules autonomes disposent de moyens d'ascension, les rendant capable de se déplacer en trois dimensions, les véhicules autonomes peuvent être construits autrement que les véhicules autonomes décrits ci-avant. Des exemples de véhicules autonomes sont notamment décrits dans les documents WO 2018/189110, mais aussi WO 2020/056175, EP 3 288 865 et WO 2022/089811.

En outre, concernant le système de guidage du véhicule autonome, le système peut être autre que le guidage par laser. Le système de guidage peut par exemple être un filoguidage, un laserguidage et un optoguidage. D'autres technologies existent telles que le géoguidage et le guidage par ultrason. Les véhicules autonomes peuvent également se déplacer grâce à des techniques de cartographie et reconnaissance de l'environnement.

## Revendications

1. Méthode pour la gestion d'énergie dans un système de stockage et de récupération automatisé (10), ledit système (10) comprenant une pluralité de véhicules autonomes (16), la méthode comprenant :
- déterminer des tâches (Lₓ) à réaliser dans une durée prédéterminée (t_{f}) ; et
- déterminer une flotte de véhicules autonomes (N) à mobiliser pour réaliser les tâches dans la durée prédéterminée (t_{f}), des paramètres de fonctionnement des véhicules autonomes (Pⱼ) pour réaliser les tâches dans la durée prédéterminée (t_{f}) et une stratégie de recharge en énergie des véhicules autonomes (Cⱼ) pour réaliser les tâches (Lₓ) dans la durée prédéterminée (t_{f}), en :
déterminant une perte énergétique (E), la perte énergétique (E) étant une différence entre une quantité d'énergie électrique utilisée (E_{elec}) et une quantité d'énergie mécanique produite (E_{mech}) pendant la durée prédéterminée (t_{f}) pour une pluralité de combinaisons de flotte de véhicules autonomes (N), de paramètres de fonctionnement (Pⱼ) et de stratégie de recharge (Cⱼ) ; et
sélectionnant la combinaison présentant la différence la plus faible de sorte que la quantité d'énergie consommée pour réaliser les tâches (Lₓ) dans la durée prédéterminée (t_{f}) soit minimale, au moins lorsque les tâches (Lₓ) sont inférieures à un nombre de tâches seuil (Lₗᵢₘ).

2. Méthode selon la revendication 1, dans laquelle déterminer la flotte de véhicules autonomes (N), les paramètres de fonctionnement des véhicules autonomes (Pⱼ) et la stratégie de recharge des véhicules autonomes (Cⱼ) est réalisé si les tâches (Lₓ) sont inférieures à un nombre de tâches seuil (Lₗᵢₘ), et prennent, sinon, des valeurs préétablies par défaut.

3. Méthode selon la revendication 1 ou 2, dans laquelle les paramètres de fonctionnement (Pⱼ) comprennent au moins un parmi : un taux d'accélération (aⱼ), un taux de décélération (dⱼ) et une vitesse de déplacement (vⱼ).

4. Méthode selon l'une quelconque des revendications 1 à 3, dans laquelle chaque véhicule autonome (16) est configuré pour se déplacer selon une direction longitudinale (x), une direction latérale (y) et une direction verticale (z), et les paramètres de fonctionnement (Pⱼ) comprennent au moins un parmi : un taux d'accélération en ascension verticale (caⱼ), un taux de décélération en ascension verticale (cdⱼ), un taux d'accélération en descente verticale (faⱼ), un taux de décélération en descente verticale (fdⱼ).

5. Méthode selon l'une quelconque des revendications précédentes, dans laquelle définir la stratégie de recharge (Cⱼ) comprend sélectionner un courant de recharge (lⱼ) et un temps de recharge (tⱼ).

6. Méthode selon l'une quelconque des revendications précédentes, dans laquelle les paramètres de fonctionnement des véhicules autonomes (Pⱼ) et/ou la stratégie de recharge des véhicules autonomes (Cⱼ) sont identiques pour chaque véhicule autonome (16) de la flotte de véhicule autonome (N).

7. Méthode selon l'une des revendications 1 à 6, dans laquelle la quantité d'énergie électrique utilisée est fonction du nombre de véhicules autonomes (N), des paramètres de fonctionnement (Pⱼ) et de la stratégie de recharge (Cⱼ), et dans laquelle la quantité d'énergie mécanique produite (E_{mech}) est fonction des paramètres de fonctionnement (Pⱼ).

8. Méthode selon l'une des revendications 1 à 7, dans laquelle la combinaison présentant la perte énergétique (E) la plus faible est mémorisée dans une base de données.

9. Programme informatique comportant des instructions pour la mise en œuvre de la méthode selon l'une des revendications 1 à 8 lorsque ce programme est exécuté par un processeur.

10. Système de stockage et de récupération automatisé (10) comprenant :
- une pluralité de véhicules autonomes (16) configurés pour retirer et/ou stocker des articles ;
- au moins une borne de recharge de véhicule autonome ; et
- un processeur configuré pour contrôler la flotte de véhicules autonomes (N), les paramètres de fonctionnement des véhicules autonomes (Pⱼ) et la stratégie de recharge (Cⱼ) par la mise en œuvre de la méthode selon l'une revendications 1 à 8.

11. Système de stockage et de récupération automatisé (10) selon la revendication 10, dans lequel chaque véhicule autonome (16) est configuré pour se déplacer selon une direction longitudinale, une direction transversale et une direction verticale.

## Patentansprüche

1. Verfahren zur Energieverwaltung in einem automatisierten Lager- und Bereitstellungssystem (10), umfassend eine Vielzahl von autonomen Fahrzeugen (16), wobei das Verfahren umfasst:
• Bestimmen der Aufgaben (Lₓ), die innerhalb einer vorbestimmten Dauer (t_{f}) auszuführen sind; und
• Bestimmen einer zu mobilisierenden Flotte von autonomen Fahrzeugen (N), um die Aufgaben innerhalb der vorbestimmten Dauer (t_{f}) auszuführen, der Betriebsparameter der autonomen Fahrzeuge (Pⱼ), um die Aufgaben innerhalb der vorbestimmten Dauer (t_{f}) auszuführen, und einer Energieladestrategie der autonomen Fahrzeuge (Cⱼ), um die Aufgaben (Lₓ) innerhalb der vorbestimmten Dauer (t_{f}) auszuführen, durch:
• Bestimmen eines Energieverlusts (E), wobei der Energieverlust (E) eine Differenz zwischen einer Menge an verbrauchter elektrischer Energie (E_{elec}) und einer Menge an erzeugter mechanischer Energie (E_{mech}) während der vorbestimmten Dauer (t_{f}) für eine Vielzahl von Flottenkombinationen autonomer Fahrzeuge (N), den Betriebsparametern (Pⱼ) und der Ladestrategie (Cⱼ) ist; und
• Auswählen der Kombination, welche die geringste Differenz aufweist, sodass die verbrauchte Energiemenge, um die Aufgaben (Lₓ) innerhalb der vorbestimmten Dauer (t_{f}) auszuführen, mindestens dann minimal ist, wenn die Aufgaben (Lₓ) unter einer Schwellenanzahl an Aufgaben (Lₗᵢₘ) liegen.

2. Verfahren nach Anspruch 1, wobei Bestimmen der Flotte von autonomen Fahrzeugen (N), der Betriebsparameter der autonomen Fahrzeuge (Pⱼ) und der Ladestrategie der autonomen Fahrzeuge (Cⱼ) durchgeführt wird, wenn die Aufgaben (Lₓ) unter einer Schwellenanzahl von Aufgaben (Lₗᵢₘ) liegen, und ansonsten voreingestellte Standardwerte annehmen.

3. Verfahren nach Anspruch 1 oder 2, wobei die Betriebsparameter (Pⱼ) mindestens eines umfassen aus: einer Beschleunigungsrate (aⱼ), einer Verzögerungsrate (dⱼ) und einer Verfahrgeschwindigkeit (vⱼ).

4. Verfahren nach einem der Ansprüche 1 bis 3, wobei jedes autonome Fahrzeug (16) konfiguriert ist, um entlang einer Längsrichtung (x), einer seitlichen Richtung (y) und einer vertikalen Richtung (z) zu verfahren, und die Betriebsparameter (Pⱼ) mindestens eines umfassen aus: einer Beschleunigungsrate bei vertikalem Anstieg (caⱼ), einer Verzögerungsrate bei vertikalem Anstieg (cdⱼ), einer Beschleunigungsrate bei vertikalem Abstieg (faⱼ), einer Verzögerungsrate bei vertikalem Abstieg (fdⱼ).

5. Verfahren nach einem der vorstehenden Ansprüche, wobei Definieren der Ladestrategie (Cⱼ) Auswählen eines Ladestroms (Iⱼ) und einer Ladezeit (tⱼ) umfasst.

6. Verfahren nach einem der vorstehenden Ansprüche, wobei die Betriebsparameter der autonomen Fahrzeuge (Pⱼ) und/oder die Ladestrategie der autonomen Fahrzeuge (Cⱼ) für jedes autonome Fahrzeug (16) der Flotte von autonomen Fahrzeugen (N) identisch sind.

7. Verfahren nach einem der Ansprüche 1 bis 6, wobei die Menge an verbrauchter elektrischer Energie von der Anzahl an autonomen Fahrzeugen (N), den Betriebsparametern (Pⱼ) und der Ladestrategie (Cⱼ) abhängig ist, und wobei die Menge an erzeugter mechanischer Energie (E_{mech}) von den Betriebsparametern (Pⱼ) abhängig ist.

8. Verfahren nach einem der Ansprüche 1 bis 7, wobei die Kombination, die den geringsten Energieverlust (E) aufweist, in einer Datenbank gespeichert wird.

9. Computerprogramm, das Anweisungen zur Umsetzung des Verfahrens nach einem der Ansprüche 1 bis 8 beinhaltet, wenn dieses Programm von einem Prozessor ausgeführt wird.

10. Automatisiertes Lager- und Bereitstellungssystem (10), umfassend:
• eine Vielzahl von autonomen Fahrzeugen (16), die konfiguriert sind, um Artikel zu entnehmen und/oder zu lagern;
• mindestens eine Ladestation für ein autonomes Fahrzeug; und
• einen Prozessor, der konfiguriert ist, um die Flotte von autonomen Fahrzeugen (N), die Betriebsparameter der autonomen Fahrzeuge (Pⱼ) und die Ladestrategie (Cⱼ) durch die Umsetzung des Verfahrens nach einem der Ansprüche 1 bis 8 zu steuern.

11. Automatisiertes Lager- und Bereitstellungssystem (10) nach Anspruch 10, wobei jedes autonome Fahrzeug (16) konfiguriert ist, um entlang einer Längsrichtung, einer Querrichtung und einer vertikalen Richtung zu verfahren.

## Claims

1. Method for energy management in an automated storage and retrieval system (10), said system (10) comprising a plurality of autonomous vehicles (16), the method comprising :
• determining tasks (Lₓ) to be carried out within a predetermined duration (t_{f}) ; and
• determining a fleet of autonomous vehicles (N) to be mobilized to carry out the tasks within the predetermined duration (t_{f}), operating parameters of the autonomous vehicles (Pⱼ) for carrying out the tasks within the predetermined duration (t_{f}) and an energy charging strategy of the autonomous vehicles (Cⱼ) for carrying out the tasks (Lₓ) within the predetermined duration (t_{f}), by :
• determining an energy loss (E), the energy loss (E) being a difference between an amount of electrical energy used (E_{elec}) and an amount of mechanical energy produced (E_{mech}) during the predetermined duration (t_{f}) for a plurality of combinations of fleet of autonomous vehicles (N), operating parameters (Pⱼ) and charging strategy (Cⱼ) ; and
• selecting the combination presenting the lowest difference such that the amount of energy consumed to carry out the tasks (Lₓ) within the predetermined duration (t_{f}) is minimal, at least when the tasks (Lₓ) are lower than a threshold number of tasks (Lₗᵢₘ).

2. Method according to claim 1, wherein determining the fleet of autonomous vehicles (N), the operating parameters of the autonomous vehicles (Pⱼ) and the charging strategy of the autonomous vehicles (Cⱼ) is carried out if the tasks (Lₓ) are lower than a threshold number of tasks (Lₗᵢₘ), and take, otherwise, pre-established default values.

3. Method according to claim 1 or 2, wherein the operating parameters (Pⱼ) comprise at least one of : an acceleration rate (aⱼ), a deceleration rate (dⱼ) and a travel speed (vⱼ).

4. Method according to any one of claims 1 to 3, wherein each autonomous vehicle (16) is configured to move along a longitudinal direction (x), a lateral direction (y) and a vertical direction (z), and the operating parameters (Pⱼ) comprise at least one of: an acceleration rate in vertical ascent (caⱼ), a deceleration rate in vertical ascent (cdⱼ), an acceleration rate in vertical descent (faⱼ), a deceleration rate in vertical descent (fdⱼ).

5. Method according to any one of the preceding claims, wherein defining the charging strategy (Cⱼ) comprises selecting a charging current (Iⱼ) and a charging time (tⱼ).

6. Method according to any one of the preceding claims, wherein the operating parameters of the autonomous vehicles (Pⱼ) and/or the charging strategy of the autonomous vehicles (Cⱼ) are identical for each autonomous vehicle (16) of the fleet of autonomous vehicles (N).

7. Method according to any one of claims 1 to 6, wherein the amount of electrical energy used is a function of the number of autonomous vehicles (N), of the operating parameters (Pⱼ) and of the charging strategy (Cⱼ), and wherein the amount of mechanical energy produced (E_{mech}) is a function of the operating parameters (Pⱼ).

8. Method according to any one of claims 1 to 7, wherein the combination presenting the lowest energy loss (E) is stored in a database.

9. Computer program comprising instructions for implementing the method according to any one of claims 1 to 8 when this program is executed by a processor.

10. Automated storage and retrieval system (10) comprising :
• a plurality of autonomous vehicles (16) configured to retrieve and/or store articles ;
• at least one autonomous vehicle charging station ; and
• a processor configured to control the fleet of autonomous vehicles (N), the operating parameters of the autonomous vehicles (Pⱼ) and the charging strategy (Cⱼ) by implementing the method according to any one of claims 1 to 8.

11. Automated storage and retrieval system (10) according to claim 10, wherein each autonomous vehicle (16) is configured to move along a longitudinal direction, a transverse direction and a vertical direction.
